Europäisches Patentamt

European Patent Office — Veröffentlichungsnummer: **0 166 821**

Office européen des brevets — **A1**

## EUROPÄISCHE PATENTANMELDUNG

(21) Anmeldenummer: **84115852.0**

(51) Int. Cl.⁴: $G\ 06\ F\ 3/037$

(22) Anmeldetag: **19.12.84**

(30) Priorität: **09.05.84 DE 3417112**

(43) Veröffentlichungstag der Anmeldung:
**08.01.86 Patentblatt 86/2**

(84) Benannte Vertragsstaaten:
**BE DE FR GB IT SE**

(71) Anmelder: **Siemens Aktiengesellschaft**
**Berlin und München Wittelsbacherplatz 2**
**D-8000 München 2(DE)**

(72) Erfinder: **Rossner, Florian, Dipl.-Ing.**
**Kleinfeldstrasse 11**
**D-8301 Furth(DE)**

(72) Erfinder: **Wiedenmann, Wolfgang, Dipl.-Ing.**
**Wiesbadener Strasse 4**
**D-8000 München 60(DE)**

(54) **Verfahren und Anordnung zur Bestimmung der Position eines Zeichens auf dem Bildschirm eines Datensichtgerätes.**

(57) Zur Bestimmung der Position eines durch einen Lichtstift (1) markierten Zeichens auf dem Bildschirm (2) eines Datensichtgeräts wird ein Suchmuster erzeugt, das senkrechte Hell/Dunkel-Grenzen aufweist und im ersten Bilddurchlauf des Suchvorgangs aus einem mindestens annähernd der Hälfte des Bildschirms entsprechenden hellen Teil und dunklen Teil besteht. In folgenden Bilddurchläufen werden weitere Teilungen vorgenommen, bis die einzelnen Teile nur noch die Breite eines Zeichens besitzen.

Die Zeilenadresse $(R_1...R_k)$ der Zeichenposition entspricht dem jeweiligen Stand eines Zeilenzählers (RZ) bei der erstmaligen Belichtung des Lichtstiftes (1). Mit jedem Bilddurchlauf wird ein Bit der Spaltenadresse $(SA_1...SA_n)$ der Zeichenposition mit abnehmender Wertigkeit in ein Schieberegister (CAR) eingegeben, wobei für die Binärwerte der Adressenbits $(SA_1...SA_n)$ die jeweils aufgetretene oder fehlende Belichtung des Lichtstiftes (1) maßgebend ist.

FIG 2

Siemens Aktiengesellschaft     Unser Zeichen
Berlin und München              VPA 84 P 1356 E

Verfahren und Anordnung zur Bestimmung der Position eines Zeichens auf dem Bildschirm eines Datensichtgerätes

Die Erfindung bezieht sich auf ein Verfahren nach dem Oberbegriff des Patentanspruchs 1 und auf eine Anordnung zur Durchführung des Verfahrens.

Ein solches Verfahren und eine entsprechende Schaltungsanordnung sind bereits durch die DE-PS 30 42 334 bekannt. Die bekannte Schaltungsanordnung löscht nach dem Aufsetzen eines Lichtstiftes auf den Bildschirm an der Stelle, deren Position nach Zeile und Spalte zu bestimmen ist, und nach dem Drücken einer Start-Taste das bisherige Bild und erzeugt stattdessen ein Suchmuster. Bei der bekannten Einrichtung besteht das Suchmuster aus senkrechten hellgesteuerten Streifen, die maximal die Breite eines Zeichenfelds haben und in gleichem Abstand von jeweils mehreren Zeichenfeldern auftreten. Die Streifen werden nach jedem Bildrücklauf um ein Zeichenfeld verschoen, so daß der Eindruck eines in Zeilenrichtung über den Bildschirm laufenden Streifenmusters entsteht.

Wenn ein Streifen des Suchmusters unter dem Lichtstift hindurchläuft gibt dieser einen Impuls ab, so daß aus der Kenntnis der gerade geschriebenen Zeichenzeile und der Zahl der seit dem Beginn des Start-Signals erfolgten Bilddurchläufe die Position des Lichtstiftes und damit des markierten Zeichens errechnet werden kann.

Der zeitliche Abstand für die Erzeugung von zwei aufein-

She 1 Stl / 28.11.84

anderfolgenden hell gesteuerten Streifen muß größer sein
als die Zeit zwichen der Belichtung eines Fotoelements
im Lichtstift und dem Auftreten eines dadurch ausgelösten, in ein internes Taktraster eingeordneten elektrischen Impulses.

Geht man beispielsweise von 80 Zeichen je Zeile und
einer Zeilenfrequenz von 25 KHz  aus, dann dauert nach
Abzug der Zeilenrücklaufzeit die Strahlablenkung über
die Breite eines Zeichenfeldes ca. 360 ns. In einem bestimmten Anwendungsfall lag die maximale Verzögerungszeit für die Entstehung des elektrischen Impulses knapp
unter 10 µs. Es wurde ein Streifenabstand von 32 Zeichenfeldern gewählt, weil dieser Wert zum einen leicht
binär abzählbar ist und zum anderen der daraus resultierende zeitliche Abstand von 32 x 360 ns = 11,5 µs  eine
ausreichende, aber nicht übertrieben hohe Sicherheit
bietet. Diese Festlegung hat allerdings zur Folge, daß
die Suchzeit im ungünstigsten Fall mehr als 0,5 sec
dauert. Diese Zeit fällt zwar im Vergleich zum Zeitbedarf für das manuelle Positionieren des Lichtstifts
und das Auslösen des Suchmusters nicht nennenswert ins
Gewicht, doch ist die Gefahr, daß der Lichtstift während der Suchzeit von der ursprünglichen Position mehr
oder weniger weit entfernt wird, schon verhältnismäßig
groß.

Der Erfindung liegt daher die Aufgabe zugrunde, ein Verfahren mit möglichst kurzer Such- bzw. Reaktionszeit für
die Bestimmung der Position eines Lichtstifts auf einem
Bildschirm anzugeben. Ein solches Verfahren ist durch
die Merkmale des Patentanspruchs 1  gekennzeichnet. Eine
Anordnung zur Durchführung des Verfahrens ist Gegenstand
des Patentanspruchs 3.

Die Feststellung der Position des Lichtstifts erfolgt
also schrittweise in mehreren Bilddurchläufen, wobei im
ersten Bilddurchlauf ein Teil des Bildschirms aufgehellt
wird und der andere Teil dunkel bleibt und nach jedem
weiteren Bilddurchlauf der für die gesuchte Position in
Frage kommende Bereich des Bildschirms mindestens annähernd halbiert wird, bis schließlich eine eindeutige
Aussage möglich ist.

Die Erfindung wird im folgenden anhand von Ausführungsbeispielen unter Zuhilfenahme der Zeichnung näher erläutert. Es zeigt darin

FIG 1   ein Blockschaltbild eines Datensichtgeräts mit
        Zeichenpositionsbestimmung,

FIG 2   einen Suchmustergenerator und

FIG 3   ein Schema für die Aufteilung einer Zeichen- bzw.
        Rasterzeile durch das Suchmuster.

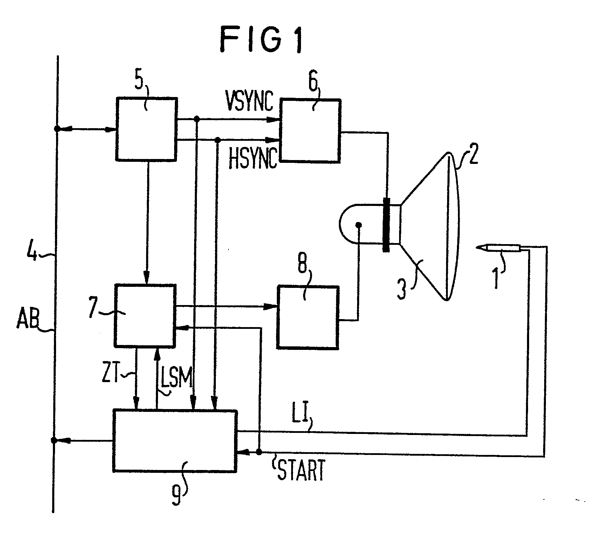

Die FIG 1  enthält eine Übersicht über die im wesentlichen bekannten Einrichtungen eines Datengeräts mit Zusatzeinrichtungen, die es ermöglichen, die Position
eines mit Hilfe eines Lichtstifts 1  markierten Zeichens
auf den Bildschirm 2  einer Bildröhre 3  zu bestimmen.
Über einen Bus 4  empfängt das Datensichtgerät Steuerinformationen, darunter beispielsweise die Adresse der
darzustellenden Zeichen und Anweisungen über die Art
ihrer Darstellung. Die Steuerinformationen lösen in
einer Einrichtung 5  zur Bildsteuerung einen Punkttakt
und einen Zeichentakt ZT,  sowie Horizontal- und Vertikal-Synchronisierimpulse HSYNC  und VSYNC  aus, die in
Ablenkschaltungen 6  Signale zur Strahlablenkung in
der Bildröhre 3  synchronisieren.

Eine als Zeichengenerator und Attributsteuerung zu bezeichnende Schaltungsgruppe 7 empfängt neben Takten insbesondere Adressen der gespeicherten Zeicheninformationen. Aus den gelesenen Zeicheninformationen wird ein Videosignal gebildet. Ein Videoverstärker 8 erzeugt daraus Steuergrößen zur Helligkeitssteuerung des Elektronenstrahls in der Bildröhre 3.

Für die Erzeugung des erfindungsgemäß ausgebildeten Suchmusters ist ein Suchmustergenerator 9 vorgesehen. Der Suchmustergenerator 9 wird durch ein durch Drücken einer Taste im Lichtstift 1 ausgelöstes Startsignal START in Funktion gesetzt. Zur Steuerung dienen ferner der Zeichentakt ZT, die Horizontal- und Vertikal-Synchronisierimpulse HSYNC und Lichtimpulse LI, die immer dann entstehen, wenn die der Lichteintrittsöffnung des Lichtstifts 1 gegenüberliegende Stelle des Bildschirms 2 hell getastet wird. Der Suchmustergenerator 9 gibt an den Zeichengenerator 7 Signale LSM, die das Suchmuster betreffen und ins Videosignal eingeblendet werden, und an den Bus 4 die Adressen der Position des Lichtstifts 1 bzw. des markierten Zeichens ab.

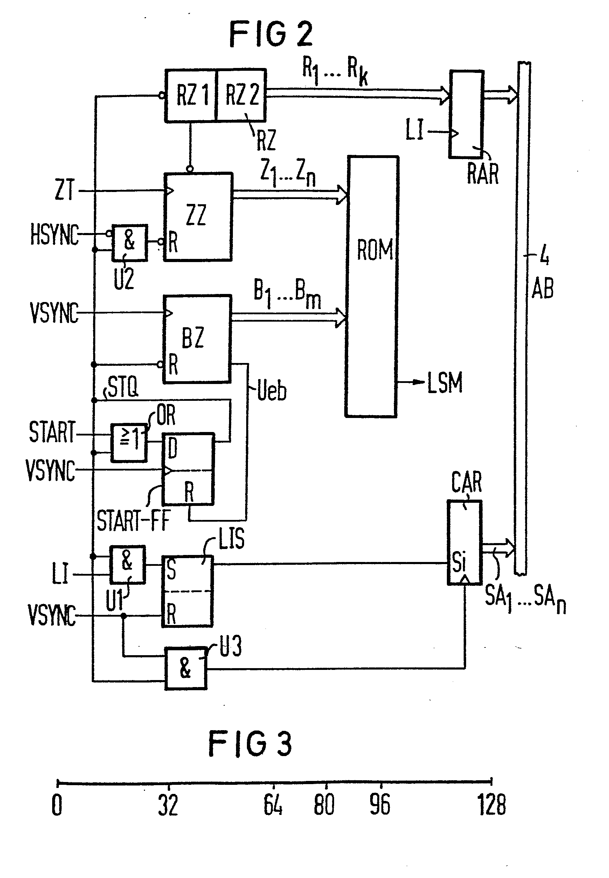

Die FIG 2 zeigt Einzelheiten des genannten Suchmustergenerators 9. Das durch Drücken der Start-Taste im Lichtstift 1 manuell ausgelöste Start-Signal START wird mit dem nächstfolgendenb Vertikal-Synchronisierimpuls VSYNC in einem D-Flipflop START-FF gespeichert, bis der Suchvorgang beendet ist. Zu diesem Zweck wird das Ausgangssignal STQ = 1 durch das ODER-Glied OR auf den Dateneingang des Flipflops START-FF zurückgeführt. Das Ausgangssignal STQ = 1 gibt die bisher beim Zählerstand Null festgehaltenen Binärzähler ZZ, RZ und BZ frei. Gleichzeitig wird die durch ein UND-Glied U1 gebildete Torschaltung für einen vom Lichtstift 1 ggf.

erzeugten Lichtimpuls LI durchlässig gesteuert. Wenn nun ein Lichtimpuls LI eintrifft, setzt er ein Flipflop LIS für die restliche Dauer des gerade ablaufenden Bilddurchlaufs. Das Rücksetzen geschieht durch den nächstfolgenden Vertikal-Synchronisierimpuls VSYNC. Der Binärwert des Ausgangssignals LSQ kennzeichnet den jeweiligen Schaltzustand des Flipflops LIS.

Der Binärzähler ZZ, im folgenden als Zeichenzähler bezeichnet, wird zwar durch das Setzen der Kippstufe START-FF grundsätzlich freigegeben, er wird jedoch durch jeden Horizontal-Synchronisierimpuls HSYNC auf den Zählerstand Null zurückgestellt. Die Horizontal-Synchronisierimpulse HSYNC werden einem invertierenden Eingang eines UND-Gliedes U2, das dem Rücksetzeingang R des Zeichenzählers ZZ vorgeschaltet ist, zugeführt. Die einzelnen Zählstufen liefern die Ausgangssignale $Z_1$ bis $Z_n$.

Mit jeder Rückstellung des Zeichenzählers ZZ wird der Zählerstand des Binärzählers RZ, der nachstehend als Zeilenzähler bezeichnet wird, nach der Freigabe um eine Zähleinheit erhöht. Da der Zeilenzähler RZ letzten Endes zur Ermittlung der Adresse der durch den Lichtstift markierten Zeichenzeile dienen soll und die Rückstellung des Zeichenzählers ZZ nach jedem Durchlauf einer Rasterzeile erfolgt, besteht der Zeilenzähler RZ aus zwei Teilen RZ1 und RZ2. Das Zählvolumen des ersten Teils RZ1 entspricht der Zahl der Rasterpunkte eines Zeichenfeldes in vertikaler Richtung, d.h. der Zahl der Rasterzeilen in einer vollständigen Zeichenzeile. Mit jedem Überlauf des ersten Zählerteils RZ1 wird der zweite Teil RZ2 um eine Einheit hochgezählt. Die Ausgänge der beispielsweise fünf Zählstufen des zweiten Teils RZ2 des Zeichenzählers RZ sind mit den Ein-

gängen eines Zeilen-Adreßregisters RAR  verbunden.
Die Ausgangssignale $R_1$  bis $R_k$  werden in das Register
RAR  übernommen, wenn ein Lichtimpuls LI  entsteht.
Die Ausgangssignale $R_1$  bis $R_k$  bilden somit die Bits
der Zeilenadresse der Lichtstiftposition.

Der dritte der bereits erwähnten Binärzähler wird nachstehend als Bildzähler BZ  bezeichnet. Er zählt die
nach seiner Freigabe aufgelaufenen Vertikal-Synchronisierimpulse VSYNC  bis ein - gegebenenfalls aus den
Ausgangssignalen mehrerer Zählstufen abgeleitetes -
Übertragssignal Ueb  entsteht, das das Flip-Flop START-
FF zurücksetzt und damit die Binärzähler ZZ, RZ  und
BZ  sperrt.

Der den Schaltzustand des Flipflops LIS  kennzeichnende Binärwert des Signals LSQ  wird mit jedem nach
dem Setzen des Flipflops START-FF  eintreffenden Vertikal-Synchronisierimpuls VSYNC,  d.h. also am Ende
eines jeden Bilddurchlaufs während des Suchvorgangs
in ein Schieberegister CAR  mit einem Serieneingang
Si  und parallelen Ausgängen $SA_1$  bis $SA_n$  übernommen. Jedes in das Schieberegister CAR neu eingegebene
und sodann vor den folgenden Eingaben schrittweise
weitergeschobene Bit zeigt somit an, ob während des
vorausgegangenen Bilddurchlaufs ein Lichtimpuls erzeugt wurde oder nicht. Die am Ende des Suchvorgangs
an den parallelen Ausgängen $SA_1$  bis $SA_n$  des Schieberegisters CAR  abgreifbaren Binärwerte bilden die
Spaltenadresse der Lichtstiftposition, wie später
noch näher dargelegt wird. Es ist noch auf das UND-
Glied $U_3$  hinzuweisen, mit dem erreicht wird, daß
Vertikal-Synchronisierimpulse VSYNC nur dann als Eingabe- und Schiebetaktimpulse für das Schieberegister
CAR  wirksam werden können, wenn das Flipflop START-FF gesetzt ist.

Die Ausgangssignale $Z_1$ bis $Z_n$ und $B_1$ bis $B_m$ der Zählstufen des Zeichenzählers ZZ  und des Bildzählers BZ bilden die Eingangssignale einer Decodierlogik ROM, deren Ausgangssignal LSM  die Hell- oder Dunkelsteuerung des Bildschirms bestimmt. Als Decodierlogik ROM dient beispielsweise ein Festwertspeicher vom Typ 1kx1 Bit, der durch die genannten Signale adressiert wird oder aus einem Netzwerk mit mehreren UND-Gliedern, deren Ausgänge über ein ODER-Glied zusammengefaßt werden.

Für die weitere Erläuterung der Erfindung ist es zweckmäßig, von einem bestimmten Ausführungsbeispiel auszugehen. Es seien daher für die Zeichenwiedergabe maximal 24 Zeichenzeilen mit je 80 Zeichen angenommen. Jede Zeichenzeile möge aus 16 Rasterzeilen zusammengesetzt sein.

Demnach umfaßt der erste Teil RZ1  des Zeilenzählers RZ 4 Stufen. Der zweite Teil RZ2  enthält fünf Stufen. Der Zeilenzähler wird mit jedem Vertikal-Synchronisierimpuls VSYNC  in die Nullstellung zurückgesetzt, analog zur Rücksetzung des Zeichenzählers ZZ  mit Hilfe der Horizontal-Synchronisierimpulse HSYNC.

Der Bildzähler BZ umfaßt 3  Stufen. Jedoch wird schon nach dem siebten Vertikal-Synchronisierimpuls VSYNC, gerechnet ab Freigabe des Bildzählers BZ,  ein Übertragsignal Ueb  gebildet, beispielsweise durch eine UND-Verknüpfung der Ausgangssignale $B_1$ bis $B_3$ aller Zählstufen. Das Signal Ueb  setzt das Flip Flop START-FF zurück, worauf auch die Binärzähler ZZ, RZ und BZ  zu-

rückgesetzt und blockiert werden. Die Grundlagen für die Bemessung und die Festlegung der Funktion des Bildzählers werden im folgenden anhand der FIG 3  noch näher erläutert.

Die im FIG 3  dargestellte, mit mehreren Markierungen versehene Gerade beginnt mit einer Markierung 0  und endet mit einer Markierung 128. Damit kann die Gerade als Diagramm des sich mit jedem Zeichentaktimpuls stetig erhöhenden Zählerstandes des Zeichenzählers ZZ  angesehen werden, wobei der Zählerstand 128  dem Zählerstand 0  entspricht. Da die Zählung der Zeichentaktimpulse stets mit dem Anfang einer neuen Rasterzeile beginnt, zeigt die FIG 3  auch schematisch eine Rasterzeile, die allerdings bei der Markierung 80  endet.

Geht man, wie schon erwähnt wurde, davon aus, daß bei dem erzeugten Suchmuster die Grenzen zwischen hellen und dunklen Bildschirmbereichen immer senkrecht verlaufen, dann ist leicht einzusehen, daß sich während eines bestimmten Bilddurchlaufs der Ablauf der Hell-Dunkel-Steuerung wiederholt. Im Hinblick auf die Spaltenposition des markierten Zeichens besteht also kein Unterschied zwischen den Raster- bzw. Zeichenzeilen.

Während des ersten Bilddurchlaufs wird das Suchmuster allein durch das Ausgangssignal $Z_7$  der höchstwertigen Zählstufe des Zeichenzählers ZZ  bestimmt. Beispielsweise wird der Bildschirm bzw. die Rasterzeile für $Z_7 = 0$  hellgesteuert und bleibt für $Z_7 = 1$  dunkel. Die Übergangsstelle entspricht der Markierung 64 in FIG 3. Nimmt man willkürlich an, daß während des ersten Bilddurchlaufs ein Lichtimpuls LI  entstanden war, dann läßt sich daraus eine Lichtstiftposition im linken, größeren Teil des Bildschirms ableiten. Im folgenden Bilddurchlauf wird der linke Bildschirmteil halbiert (Markierung 32) und die eine Hälfte hell- und die andere Hälfte dunkelgesteuert. Aus dem Eintreffen oder Fehlen eines Lichtimpulses kann wieder erkannt werden, in welcher Hälfte der Lichtstift positioniert ist. Diese Hälfte wird weiter halbiert. Besitzt schließlich eine Hälfte nur noch die Breite eines Zeichenfeldes, dann ist die Spaltenposition des Lichtstifts genau bestimmt. In dem angenommenen Beispiel ist das im siebten Bilddurchlauf der Fall, weshalb der siebte Vertikal-Synchronisier-Impuls VSYNC nach der Eingabe in den Bildzähler BZ den Suchvorgang beendet. Die Zeilenposition ergibt sich, wie schon beschrieben wurde, aus der Zählung der bis zur Entstehung eines Lichtimpulses bereits durchlaufenen Zeilen mit Hilfe des Zeilenzählers RZ (FIG 2).

Im Prinzip der gleiche Ablauf ergibt sich, wenn die Position des Lichtstifts während des ersten Bilddurchlaufs im rechten (kleineren) Teil des Bildschirms (gemäß FIG 3 zwischen den Markierungen 64 und 80) festgestellt wurde. In diesem Fall würde während des zweiten Bilddurchlaufs der Hell/Dunkel-Übergang erst bei Markierung 94 entstehen und damit außerhalb des benutzten Bildschirmbereichs liegen.

Beim dritten Bilddurchlauf fällt die Hell/Dunkel-Grenze auf die Markierung 80. Damit liefert auch der dritte Bilddurchlauf ebenso wie der zweite keinen Beitrag zur weiteren Eingrenzung der Position des Lichtstifts. Erst die folgenden Bilddurchläufe tragen wieder zu diesem Ergebnis bei. Die beiden an sich nutzlosen und daher überflüssigen Bilddurchläufe könnten durch schaltungstechnische Maßnahmen vermieden werden, doch wird der dadurch bedingte Mehraufwand durch den erzielbaren Nutzen nicht aufgewogen.

Zur Ableitung des Signals LSM, das für die Hell/Dunkel-Verteilung des Suchmusters maßgebend ist und beispielsweise für LSM = 1 eine Aufhellung bewirkt, ist die Nummer des Bilddurchlaufs und der Stand des Zeichenzählers ZZ von Bedeutung. Da das Suchmuster mit jedem Bilddurchlauf feiner unterteilt wird, werden zur Steuerung des Signals LSM nacheinander die Ausgangssignale $Z_7$ bis $Z_1$ verschiedener Zählstufen des Zeichenzählers ZZ herangezogen.

Im einzelnen ergeben sich die aus der nachstehenden Tabelle ersichtlichen Bedingungen für LSM = 1. Der Buchstabe x steht für beliebige Binärwerte. Im Gegensatz zu dem vorher gewählten Beispiel wird der Bildschirm nun mit $Z_n = 1$ (n = 7...1) hell gesteuert.

| $B_3$ | $B_2$ | $B_1$ | $Z_7$ | $Z_6$ | $Z_5$ | $Z_4$ | $Z_3$ | $Z_2$ | $Z_1$ |
|---|---|---|---|---|---|---|---|---|---|
| 0 | 0 | 0 | 1 | x | x | x | x | x | x |
| 0 | 0 | 1 | x | 1 | x | x | x | x | x |
| 0 | 1 | 0 | x | x | 1 | x | x | x | x |
| 0 | 1 | 1 | x | x | x | 1 | x | x | x |
| 1 | 0 | 0 | x | x | x | x | 1 | x | x |
| 1 | 0 | 1 | x | x | x | x | x | 1 | x |
| 1 | 1 | 0 | x | x | x | x | x | x | 1 |

Die der vorstehenden Tabelle zu entnehmenden Bedingungen für die Entstehung eines Hellsteuersignals LSM = 1 lassen sich auch durch die folgenden logischen Beziehungen ausdrücken:

$$LSM = \overline{B_1} \cdot \overline{B_2} \cdot \overline{B_3} \cdot Z_7 + B_1 \cdot \overline{B_2} \cdot \overline{B_3} \cdot Z_6 +$$

$$+ \overline{B_1} \cdot B_2 \cdot \overline{B_3} \cdot Z_5 + B_1 \cdot B_2 \cdot \overline{B_3} \cdot Z_4 +$$

$$+ \overline{B_1} \cdot \overline{B_2} \cdot B_3 \cdot Z_3 + B_1 \cdot \overline{B_2} \cdot B_3 \cdot Z_2 +$$

$$+ \overline{B_1} \cdot B_2 \cdot B_3 \cdot Z_1$$

Aus der Tabelle läßt sich ablesen daß ab dem zweiten Bilddurchlauf das Suchmuster selbst nicht mehr eindeutig ist, insofern als die Zahl der hellen Streifen auf dem Bildschirm umso mehr zunimmt, je schmaler die Streifen werden. Die Mehrdeutigkeit des Suchmusters ist jedoch unschädlich, weil nach dem ersten Bilddurchlauf bereits das erste, höchstwertige Bit der Spaltenadresse, nach dem zweiten Bilddurchlauf das zweite Bit usw. abgespeichert werden.

Die Inhalte des Zeilen-Adreßregisters RAR und des Schieberegisters CAR zur Bildung der Spaltenadresse werden über einen Datenbus AB zur weiteren Auswertung abgefragt.

3 Figuren
5 Patentansprüche

Patentansprüche

1, Verfahren zur Bestimmung der Position eines Zeichens
auf dem Bildschirm eines die Zeichen nach dem Rasterverfahren erzeugenden Datensichtgeräts unter Verwendung
eines auf den Bildschirm aufsetzbaren Lichtstifts, wobei
nach dem Aufsetzen des Lichtstifts auf den Bildschirm
und nach Ausgabe eines Startsignals der Bildinhalt dunkel gesteuert wird und von einem Suchmustergenerator ein
Suchmuster erzeugt wird, das vertikale, mit Zeichenfeldgrenzen zusammenfallende Hell-Dunkel-Grenzen aufweist,
d a d u r c h   g e k e n n z e i c h n e t ,
daß in einem ersten Bilddurchlauf ein Teil erster Ordnung des Bildschirms (2) aufgehellt wird und der andere
Teil erster Ordnung dunkel bleibt, so daß die Position
des Lichtstifts (1) in bezug auf die beiden Teile erster
Ordnung aus dem Vorhandensein bzw. Fehlen eines durch
den Lichtstift (1) erzeugten Ausgangssignals (LI) eindeutig feststellbar ist, daß im folgenden Bilddurchlauf
mindestens derjenige Teil erster Ordnung, in dem die
Position des Lichtstifts (1) festgestellt wurde, in zwei
Teile zweiter Ordnung aufgeteilt wird, wovon der eine
hell und der andere dunkel gesteuert wird, so daß die
Position des Lichtstifts (1) in bezug auf die beiden
Teile zweiter Ordnung aus dem Vorhandensein oder Fehlen
eines Ausgangssignals (LI) eindeutig feststellbar ist,
daß in weiteren Bilddurchläufen weitere Unterteilungen
jeweils mindestens derjenigen Teile niedrigerer Ordnung,
in denen die Position des Lichtstifts (1) festgestellt
wurde, in Teile höherer Ordnung erfolgen, bis ein heller
oder dunkler Teil, der die Position des Lichtstifts (1)
angibt, nur noch die Breite eines Zeichenfeldes
aufweist,
daß mit jedem Bilddurchlauf der Binärwert eines Bits der
Spaltenadresse ($SA_n ... SA_1$) der Lichtstiftposition mit

abnehmender Wertigkeit festgestellt und in ein Register (CAR) eingegeben wird und daß die Zeilenadresse des markierten Zeichens durch Zählung der in einem Bilddurchlauf bis zu der Entstehung eines Ausgangssignals (LI) des Lichtstifts (1) bereits geschriebenen Zeichenzeilen ermittelt wird.

2. Verfahren nach Anspruch 1, d a d u r c h   g e -
k e n n z e i c h n e t ,

daß im ersten Bilddurchlauf die beiden Teile tatsächlich oder fiktiv je $2^{n-1}$ Zeichenfelder umfassen, wobei Z die Zahl der Zeichenfelder je Zeile ist und für eine ganze Zahl n gilt $Z \leqq 2^n < 2Z$, und

daß in jeden weiteren Bilddurchlauf eine Halbierung desjenigen tatsächlichen oder fiktiven Teils erfolgt, in dem bei dem vorausgehenden Bilddurchlauf die Position des Lichtstifts (1) festgestellt wurde.

3. Anordnung zur Durchführung des Verfahrens nach Anspruch 1, mit einem Bildzähler zur Zählung der seit dem Beginn des Suchvorgangs zur Positionsbestimmung erfolgten Bilddurchläufe, mit einem Zeilenzähler zur Zählung der während eines Bilddurchlaufs fortlaufend geschriebenen Zeichenzeilen und mit einem Zeilenadreßregister zur Übernahme des bei der Entstehung eines Ausgangssignals des Lichtstifts vorliegenden Zählerstandes des Zeilenzählers als Zeilenadresse, g e k e n n z e i c h n e t

a) durch ein Flipflop (LIS) zur Speicherung eines während eines Bilddurchlaufs gegebenenfalls erzeugten Lichtstiftausgangssignals (LI),

b) durch einen Zeichenzähler (ZZ) zur Zählung der während eines Zeilenduchlaufs auf dem Bildschirm bereits durchlaufenen Zeichenfelder,

c) durch eine Decodierlogik (ROM) zur Ableitung von Suchmustersteuersignalen (LSM) aus den Ausgangssignalen ($Z_1...Z_n$ und $B_1...B_m$) der einzelnen Zählstufen des Zeichenzählers (ZZ) sowie des Bildzählers (BZ).

4. Anordnung nach Anspruch 3, d a d u r c h  g e - k e n n z e i c h n e t , daß der Zeilenzähler (RZ) aus einem ersten Teil (RZ1) und einem zweiten Teil (RZ2) besteht, daß der erste Teil (RZ1) des Zeilenzählers (RZ) ein der Zahl der Rasterzeilen je Zeichenzeile entsprechendes Zählvolumen aufweist und daß der zweite Teil (RZ2) des Zeichenzählers (RZ), der Zeichenzähler (ZZ) und der Bildzähler (BZ) zur Zählung von Zweierpotenzen mit ganzzahligen Exponenten ausgebildet sind, wobei jeweils die betreffende Zweierpotenz größer oder gleich dem jeweils zugeordneten höchsten Zählergebnis ist.

5. Anordnung nach Anspruch 1, d a d u r c h  g e - k e n n z e i c h n e t , daß das Register (CAR) zur Aufnahme der Spaltenadresse ($SA_n...SA_1$) der Position des Lichtstifts (l) als Schieberegister ausgebildet ist.

## FIG 1

## FIG 2

## FIG 3

| | | | | | | |
|---|---|---|---|---|---|---|
| 0 | 32 | 64 | 80 | 96 | | 128 |

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | FR-A-2 360 942 (TRANSAC) * Seite 6, Zeile 7 - Seite 7, Zeile 7 * --- | 1,2 | G 06 F 3/037 |
| D,A | DE-A-3 042 334 (SIEMENS) ----- | | |

RECHERCHIERTE SACHGEBIETE (Int. Cl. 4)

G 06 F 3/037
G 06 K 11/06

Der vorliegende Recherchenbericht wurde für alle Patentansprüche erstellt.

| Recherchenort DEN HAAG | Abschlußdatum der Recherche 15-08-1985 | Prüfer CERVANTES J.P.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82